# EUROPEAN PATENT APPLICATION

(11) **EP 1 657 079 A1**
(43) Date of publication of application: **17.05.2006**
(21) Application number: 05256490.3
(22) Date of filing: 19.10.2005
(51) Int. Cl.: B60B 33/02, B61F 5/38

(54) **A railway system comprising vehicles having castor wheels running on trough rails**

(30) Priority: 11.11.2004 GB 2408491
(71) Applicant: Cannell, Cyril, Peel, Isle of Man. IM5 1TB (VG)
(72) Inventor: Cannell, Cyril, Peel, Isle of Man. IM5 1TB (VG)

(57) **Abstract**

A ground level or elevated railway with the wheels of the railway vehicles fitted with tyres of rubber or other resilient material, the leading and trailing wheels of the trucks or bogies being both arranged to castor and alternately locked by a sliding bar (1) according to the direction of travel. The rails are of solid or hollow trough section (2 and 3), the latter being temperature controlled and fault monitored by circulation of fluid through the hollow cavity.

## Description

This invention relates to improvements in the field of ground level and elevated railway technology.

The use of railway wheels being fitted with tyres of rubber or other suitable resilient material is by no means novel, the well known advantages being quieter running free from the noise and also from the mechanical shocks that can occur between metal wheels in contact with metal rails. However, railway wheels have to be guided,but when fitted with tyres of rubber or other suitable resilient material would suffer an unacceptable degree of sidewall wear, if guided by lateral rail flanges.Lateral horizontally positioned guidewheels are commonly employed to achieve this guidance, but then involve additional costs for initial equipment and for routine maintenance. An alternative is to arrange for the load carrying railway wheels to run on rails or rail of suitably profiled trough section. However, the leading wheels of the railway vehicle trucks or bogies then require to be provided with castoring action, but this presents additional problems, since if travel is required in a reverse direction,the now trailing castoring wheels will tend to turn across the trough and so prevent further movement. The now leading wheels will now of course be required to castor, but the now trailing wheels must be prevented from doing so, the method of achieving this process is a component of this invention. Rails formed as troughs also present problems, not only the need to remove any water but also blockage by ice or snow, tyres of rubber or other suitable resilient material could be damaged by high ambient temperatures and the trough kept clear of debris of any kind. With several railway fatal accidents in recent years by reason of rail fractures,means of prompt fault detection, preferably from a central control centre, is also a component of this present invention.

According to the present invention, there is provided a ground level or elevated railway system, wherein the railway vehicle load carrying wheels are fitted with tyres of rubber or other suitable resilient material, both
the leading and trailing wheels of the railway vehicles trucks ...... ..... locking the castor action of the trailing wheels according to the direction of travel, said wheels running on a rail or rails having solid or hollow trough section.

A specific embodiment of the invention will now be described by way of example with reference to the accompanying drawing in which :-
Figure 1. shows optional cross sections, reduced in scale,of the profiled rail, preferance being for the hollow sections illustrated.
Figure 2. shows an asymetrical cross section, reduced in scale,of the profiled rail, this of hollow section and with advantage for certain elevated monorail railway systems.
Figure 3. shows in diagram form the side elevation of one of the railway vehicle trucks or bogies.
Figure 4. shows in diagram form a plan view of one of the railway vehicle trucks or bogies, with sliding locking bar 1.
Figure 5. illustrates in diagram form, the directional locking mechanism of the castoring wheels.

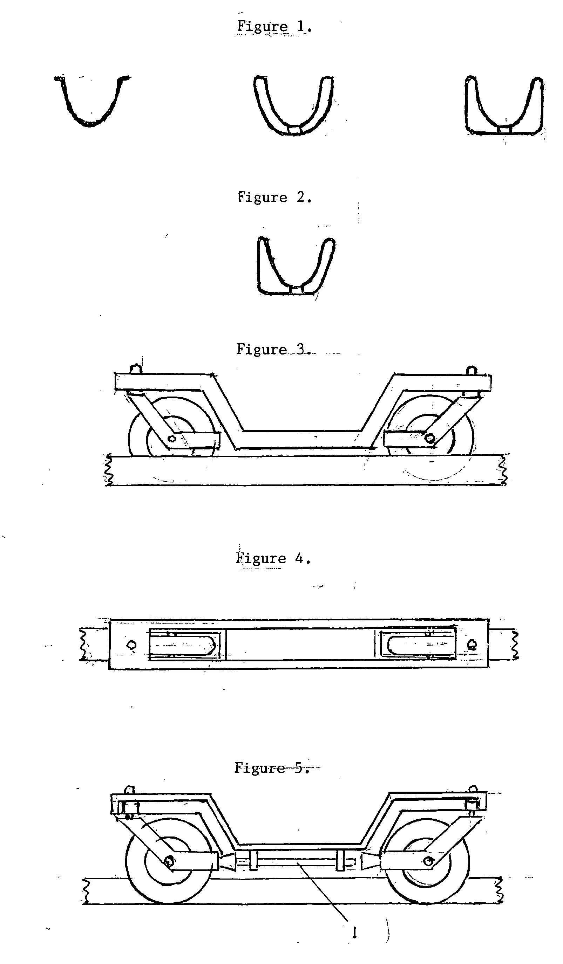

Rails of steel or other suitably durable material are formed as solid or hollow trough sections for the tyred wheels of the railway trucks or bogies in which to run, a semi-elliptical section profile or similar to accomadate the contour of the wheel tyres being preferred - Figure 1. The cushioning effect of wheels fitted with tyres of resilient material, between the rails or rail, substantially reduces the mechanical shock of metal to metal contact of conventional railway wheel and track systems, this enables the rails to be manufactured from less massive material, resulting in lower overall costs and more economical use of possibly scarce future World supplies. Strip material, seam welded together, is employed for the preferred hollow section rails or rail, or alternatively the re-profiling ..... ......... of round tubular section material. Trough sections are inherently stiff as beams and may therefore span greater distances between supports than with the rails commonly utilised for conventional railways. This structural stiffness is enhanced in the case of hollow sections by the provision of tubular spacers at intervals along the lowest part of the trough, joining the two adjacent surfaces and allowing for the drainage of water from the trough, also by forming the outer sides as vertical surfaces. However, for elevated railways, an asymetrical section is optional, to provide more compact connection arms between the railway trucks or bogies and the suspended carriages, Figure 2. Provision may also be made to control the temperature of hollow section rails or rail, by the circulation of fluid through the hollow cavities, so avoiding damage to tyres by high ambient temperatures,and also by possible blockages by ice or snow, equipment for heating or cooling the fluid being installed as required for this purpose. The fluid any optionally be subjected to a certain degree of pressure, the monitoring of which then giving an indication of any structural faults, such as fractures or breakages, which may then also be more easily located by audible or visual means, adding to the safety of the system. Suitably located downward facing air jets are optionally installed on the railway vehicle trucks or bogies, to be operated when required to remove any loose debris from the rails or rail,and to ensure that the tubular spacers remain adequately open for drainage purposes.

Both the leading and trailing wheels of the railway trucks or bogies are arranged to castor - Figures 3 and 4, the castor wheel frames are extended and provided with orifices for the engagement of a sliding longtitudinal locking bar, which is mounted on the frame of the railway truck or bogie - Figure 5. Suitably tapered entrances to thse orifices ensures positive engagement of the sliding locking bar irrespective of whether the railway vehicle is located on either a straight or curved portion of the track. Movement of the sliding kocking bar is activated by and synchronised with the traction control of the railway vehicle, or by servo action linked to the reverse movement of the truck or bogie.

## Claims

1. A ground level or elevated railway system,wherein a railway vehicle includes trucks or bogies supported upon leading and trailing castor wheels, said wheels being fitted with tyres of rubber or other resilient material and having means for locking the castor action of the trailing wheels according to the direction of travel,said wheels running on a rail or rails having a solid or hollow trough section.

2. A ground level or elevated railway system as claimed in claim 1.wherein the leading and trailing wheels are attached to wheel support frames,each said frame having an orifice with a tapered entrance,said entrances being positioned so as to engage alternatively with a sliding locking bar.

3. A ground level or elevated railway system,as claimed in claim 2,wherein movement of the sliding locking bar is linked to and synchronised with a control mechanism of the railway vehicle,or by servo action linked to the reverse movement of the railway trucks or bogies.

4. A ground level or elevated railway system,as claimed in claim 1,wherein the trough section rails made of steel or other durable material,are formed as hollow sections,with tubular spacers joining the two adjacent surfaces at intervals along the lowest part of the troughs.

5. A ground level or elevated railway system,as claimed in claims 1 and 4, wherein fluid is circulated through the hollow section rails,the fluid temperature controlled to within prescribed limits.

6. A ground level or elevated railway system,as claimed in claim 5,wherein the fluid circulated through the hollow section rails is pressurised,the pressure monitored from a convenient location.

7. A ground level or elevated railway system substantially as described herein,with reference to Figures 1 - 5 of the accompanying drawing.

## Amended claims

### Amended claims in accordance with Rule 86(2) EPC.

**1.** A ground level or elevated railway system,wherein a railway vehicle includes trucks or bogies supported upon leading and trailing castor wheels,said wheels being fitted with tyres of rubber or other resilient material and having means for locking the castor action of the trailing wheels according to the direction of travel,said wheels running on a rail or rails having a solid or hollow trough section.
**Characterised in that** the leading and trailing wheels of the railway vehicle trucks or bogies are attached to wheel support frames,each said frame having an orifice with a tapered entrance,said entrance being positioned so as to engage alternatively with a sliding locking bar.

**2.** A ground level or elevated railway system,according to Claim 1.
**Characterised in that** movement of the sliding locking bar is linked to and synchronised with a control mechanism of the railway vehicle,or by servo action linked to the reverse movement of the railway trucks or bogies.

**3.** A ground level or elevated railway system,according to Claim 1.
**Characterised in that** the trough section rails made of steel or other durable material,are formed as hollow sections,with tubular spacers joining the two adjacent surfaces at intervals along the lowest part of the troughs.

**4.** A ground level or elevated railway system,as claimed in claims 1 and 3,
**Characterised in that** fluid is circulated through the hollow section rails,the fluid temperature controlled within prescribed limits.

**5.** A ground level or elevated railway system,according to Claim 4. **Characterisd in that** the fluid circulated through the hollow section rails is pressurised,the pressure monitored from a convenient location.
